# EUROPÄISCHE PATENTSCHRIFT

(11) **EP 2 135 500 B1**
(45) Veröffentlichungstag und Bekanntmachung des Hinweises auf die Patenterteilung: **12.10.2011**
(21) Anmeldenummer: 09155958.3
(22) Anmeldetag: 24.03.2009
(51) Int. Cl.: A01D 43/00

(54) **Selbstfahrendes Erntefahrzeug für technisch zu nutzendes Erntegut**
Self-driving harvester for crops to be used technically
Récolteuse automobile pour la récolte technique

(30) Priorität: 19.06.2008 DE 102008028859
(43) Veröffentlichungstag der Anmeldung: 23.12.2009
(73) Patentinhaber: CLAAS Selbstfahrende Erntemaschinen GmbH, 33428 Harsewinkel (DE)
(72) Erfinder: Weigelt, Dr. Horst, 33330, Gütersloh (DE)

(56) Entgegenhaltungen:
- WO-A-2007/132498
- DE-A1-102004 003 011
- GB-A- 621 082
- US-A- 4 287 708

## Beschreibung

Die vorliegende Erfindung betrifft ein selbstfahrendes Erntefahrzeug, das speziell an die Ernte von technisch, insbesondere energietechnisch zu nutzendem Erntegut angepasst ist.

Aufgrund stark steigender Kosten fossiler Energieträger rücken Techniken zur Kraftstoffgewinnung aus nachwachsenden Rohstoffen in letzter Zeit verstärkt in den Mittelpunkt des öffentlichen Interesses.

Ein Problem bei den meisten Techniken zur Kraftstoffgewinnung aus Biomasse ist der hohe Wassergehalt der Biomasse in frischem Zustand. Wenn frische Biomasse zu einer stationären Anlage transportiert werden muss, um dort zu Kraftstoff verarbeitet zu werden, werden große Mengen von in der Biomasse gebundenem Wasser bewegt, was hohe Transportkosten und letztlich einen hohen Energieaufwand erfordert. Rechnet man diesen in die Energiebilanz eines aus der Biomasse erzeugten Kraftstoffs ein, so ergibt sich ein niedriger, unter Umständen sogar negativer Wirkungsgrad. Es ist daher wichtig, die Transportwege zwischen Feld und Verarbeitungsanlage als auch die zu befördernde Masse zu minimieren.

DE 10 2004 003 011 A1 schlägt zur Erreichung dieses Zieles vor, die Verarbeitungsanlage als Teil einer selbstfahrenden Erntemaschine zum Erntegut aufs Feld zu bringen und das Erntegut noch auf dem Feld zu Kraftstoff zu verarbeiten. Diese bekannte Erntemaschine umfasst ein Verarbeitungsmödul zum Zerkleineren und Pressen der geernteten Biomasse, wodurch diese in einen Feststoffanteil und einen Anteil aus Pflanzensäften getrennt wird. Der so erhaltene Feststoffanteil wird anschließend getrocknet, um seinen Wassergehalt so weit herunter zu setzen, dass er in einem Verölungsmodul zu Benzin, Dieselöl und Schweröl weiter verarbeitet werden kann. Um eine Verarbeitung der geernteten Biomasse zu Kraftstoff noch während des Erntevorgangs zu ermöglichen, müssen die erwähnten Prozesse schnell ablaufen, was insbesondere im Falle des Trocknens nicht ohne: erhebliche Energiezufuhr von außen möglich ist. Da auch hier die zum Trocknen aufgewandte Energie den Wirkungsgrad des gesamten Prozesses erheblich beeinträchtigt, ist es wichtig, der Biomasse auf mechanischem Wege so viel Feuchtigkeit zu entziehen, dass die Trocknung mit minimalem Energieaufwand ablaufen oder idealerweise ganz entfallen kann.

Die vorliegende Erfindung löst diese Aufgabe, indem bei einem selbstfahrenden Erntefahrzeug mit einem Erntegutaufnehmer, einer Zerkleinerungsstufe zum Zerkleinern des Ernteguts und einer mechanischen Entwässerungseinrichtung zum Abscheiden eines wässrigen Anteils aus dem Erntegut die mechanische Entwässerungseinrichtung eine der Zerkleinerungsstufe vorgeschaltete erste Entwässerungsstufe und eine der Zerkleinerungsstufe nachgeschaltete zweite Entwässerungsstufe umfasst.

Indem mittels der ersten Entwässerungsstufe zunächst schwach im Zellverbund des geernteten Pflanzenmaterials gebundenes Wasser beseitigt wird und erst anschließend das Pflanzenmaterial zerkleinert wird, wird ein Material erhalten, dessen Zellgefüge durch den Wasserverlust in der ersten Entwässerungsstufe aufgelockert ist. Wasser, das in der zweiten Entwässerungsstufe aus den Pflanzenzellen freigesetzt wird, kann in den so erhaltenen Freiräumen des Zellverbands relativ leicht bis zu einer Schnittfläche des entsprechenden Pflanzenmaterialstücks vordringen und schließlich aus dem zurückbleibenden Feststoff austreten. Indem so die erste mechanische Entwässerung und die Zerkleinerung die Biomasse für den nächfolgenden zweiten Entwässerungsschritt aufschließen, kann in kurzer Zeit und mit niedrigem Aufwand an Antriebsenergie aus frischer Biomasse entwässerte Biomasse mit besonders niedrigem Restwassergehalt erhalten werden.

Vorzugweise umfasst die erste Entwässerungsstufe wenigstens ein Presswalzenpaar, das einen von der geernteten Biomasse durchlaufenden Pressspalt begrenzt.

Die zweite Entwässerungsstufe, in der die zerkleinerte Biomasse nochmals entwässert wird, umfasst vorzugsweise einen Dekanter oder eine Schneckenpresse, die beide zur schnellen Verarbeitung großer Mengen von zerkleinertem Material geeignet sind.

Eine Heizeinrichtung kann vorgesehen sein, um die die zweite Entwässerungsstufe durchlaufende Biomasse zu erhitzen. Die Erhitzung schließt den Zellverband des Materials weiter auf und erleichtert so zusätzlich die Entwässerung. Da diese Erhitzung nur dem weiteren Aufschluss der Zellen der Biomasse dient, nicht aber dazu, deren übrig gebliebene Feuchtigkeit zu verdampfen, ist der Leistungsbedarf der Heizeinrichtung gering im Vergleich zu der Heizleistung, die erforderlich wäre, um gemäß dem herkömmlichen Verfahren die Biomasse zu trocknen.

Entwässerungseinrichtung und Zerkleinerungsstufe sind vorzugsweise so ausgelegt bzw. so betreibbar, dass aus der zweiten Entwässerungsstufe entwässertes Erntegut mit einem Trockenmasseanteil von wenigstens 60%, besser wenigstens 70%, erhalten werden kann. Dieses entwässerte Erntegut besteht unabhängig von der geernteten Pflanzenart im Wesentlichen aus Zellulose.

Der zweiten Entwässerungsstufe ist vorzugsweise eine Wärmebehandlungsstufe nachgeschaltet. Diese Wärmebehandlungsstufe kann insbesondere einen thermochemischen Reaktor zum Verschwelen des entwässerten Ernteguts in gasförmige und/oder flüssige und/oder feste Reaktionsprodukte umfassen.

Wenn, wie oben erwähnt, eins Heizeinrichtung zum Erhitzen des die zweite Entwässerungsstufe durchlaufenden Ernteguts vorgesehen ist, kann die Abwärme dieses Reaktors genutzt werden, um damit die Heizeinrichtung zu speisen.

Die Wärmebehandlüngsstufe kann auch eine Trocknungsstufe umfassen. Diese kann für sich allein dazu dienen, noch weiter entwässertes Erntegut zu erhalten, das gut transportierbar und lagerfähig ist; sie kann aber auch dem thermochemischen Reaktor vorgeschaltet sein, um diesen mit gut entwässertem Rohstoff für die Verschwelung zu versorgen.

Um das von der zweiten Entwässerungsstufe ausgegebene Erntegut schnell und effizient zu trocknen, kann die Trocknungsstufe Mittel zum Versetzen des zu trocknenden Ernteguts mit einem heißen Wärmeträgermaterial umfassen.

Wenn die Wärmebehandlüngsstufe den Reaktor umfasst, handelt es sich bei dem Märmeträgermäterial vorzugsweise um ein Reaktionsprodukt des Reaktors. Das Reaktionsprodukt verlässt den Reaktor im Allgemeinen mit einer hohen Temperatur, und es ist wünschenswert, das. Reaktionsprodukt abzukühlen, bevor es zur Lagerung einem Tank zugeführt wird.

Der Reaktor liefert im Allgemeinen gasförmige, flüssige und/oder auch feste Reaktionsprodukte, d.h. Gas, Öl und/oder Koks. Wenn als Wärmeträgermaterial in der Trockenstufe gasförmige Reaktionsprodukte in die zu trocknende Biomasse eingeblasen werden, so vermischen sich diese mit Wasserdampf aus der Biomasse, bleiben aber nicht in nennenswertem Umfang in der Biomasse zurück, so dass sich spezielle Einrichtungen zum Abtrennen des Reaktionsprodukts von der Biomasse erübrigen. Es ist auch denkbar, festes Reaktionsprodukt (Koks) beizumischen, um die Biomasse zu erhitzen. In diesem Fall ist es schwierig, beides vor dem Eintritt in den Reaktor wieder voneinander zu trennen. In diesem Fall wird der Koks zusammen mit der frischen Biomasse einfach wieder in den Reaktor eingespeist.

Vorzugsweise ist das zugefügte Wärmeträgermaterial flüssig (Öl). Dies gewährleistet eine sehr schnelle und effektive Wärmeübertragung von dem Wärmeträgermaterial auf die Biomasse durch Benetzung und Vermischung.

In diesem Fall ist vorzugsweise zwischen der Trocknungsstufe und dem Reaktor eine Trennstufe, insbesondere eine Presse vorgesehen, um das Öl von der Biomasse wieder zu trennen und das Öl als Ausbeute des Prozesses abzuführen. So braucht das Öl nicht in einem neuerlichen Durchgang durch den Reaktor wieder erhitzt zu werden. Nur ein durch die Trennstufe nicht abgeschiedener Rest des Öls durchläuft von neuem den Reaktor. Da dieser Rest beim Durchgang durch den Reaktor nicht verloren geht, brauchen keine allzu hohen Anforderungen an die Trennstärke der Trennstufe gestellt zu werden.

Auch wenn die Wärmebehandlungsstufe den Reaktor nicht umfasst, ist es zweckmäßig, die Trennstufe zum Abscheiden des Wärmeträgermaterials vorzusehen, um dieses wiederzugewinnen und es von neuem erhitzen und der Trocknerstufe zuführen zu können.

Es kann zweckmäßig sein, Wasserstoffgas in den Reaktor einzuspeisen, um den Restsauerstoffgehalt des erhaltenen Öls zu reduzieren bzw. das Wasserstoff-Kohlenstoff-Verhältnis im erhaltenen Öl und damit auch die Länge von dessen Kohlenstoffketten auf einen gewünschten Wert einzustellen.

Zur Gewinnung des Wasserstoffs kann eine Elektrolysestufe dienen, die den in der Ehtwässerungseinrichtung abgeschiedenen wässrigen Anteil elektrolysiert.

Um im Reaktor als Dämtpf freigesetzte Reaktionsprodukte aufzufangen, ist vorzugsweise eine Köndensationsstufe vorgesehen. In dieser wird auch Wasser aufgefangen, das entweder mit der Biomasse eingetragen oder im Reaktor entständen ist und das die Qualität des Kondensats beeinträchtigt. Um ein in der Kondensationsstufe erhaltenes wasserreiches Kondensat von Kchlenwasserstoff-Ahteilen zu befreien, kann das Kondensat durch einen Filter geführt werden, der mit Koks aus dem Reaktor als Filtermaterial beschickbar ist. In dieser Weise gereinigtes Wasser kann wie überschüssiges Wasser aus den mechanischen Entwässerungsstufen unmittelbar aufs Feld abgelassen werden. Der im Filter mit organischen Bestandteilen gesättigte Koks kann - direkt oder indirekt - in den Reaktor zurückgeführt werden.

Gasförmige Reaktionsprodukte, insbesondere solche, die nach Durchlauf durch die Kondensationsstufe als nicht kondensierbar übrig bleiben, werden vorzugsweise im Erntefahrzeug selbst als Energieträger genutzt, insbesondere zum Beheizen des Reaktors.

Es kann: ferner eine Konzentrationsstufe vorgesehen sein, die den in wenigstens einer der Entwässerungsstufen abgeschiedenen wässrigen Anteil empfängt, um diesen in einen an gelösten Stoffen angereicherten und einen an gelösten Stoffen abgereicherten Anteil zu schneiden. Während der angereicherte Anteil im Allgemeinen zur Weiterverarbeitung in einem Tank des Erntefahrzeugs gesammelt werden wird, wird der abgereicherte Anteil vorzugsweise wie oben erwähnt aufs Feld abgelassen.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Darstellung der Verar- beitungseinrichtungen des erfindungsgemä- ßen Erntefahrzeugs gemäß einer ersten Ausgestaltung; und
- Fig. 2: eine zur Fig. 1 analoge schematische Dar- stellung gemäß einer zweiten Ausgestal- tung.

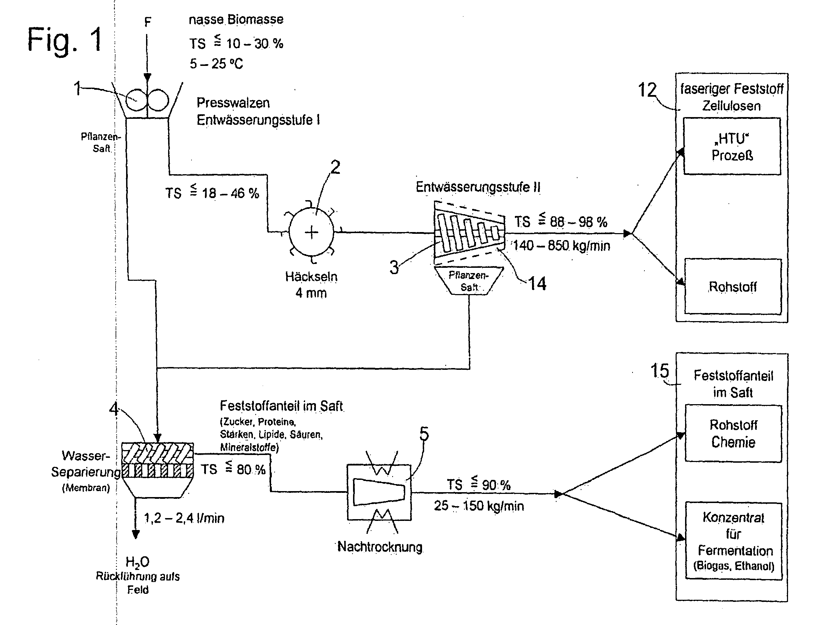

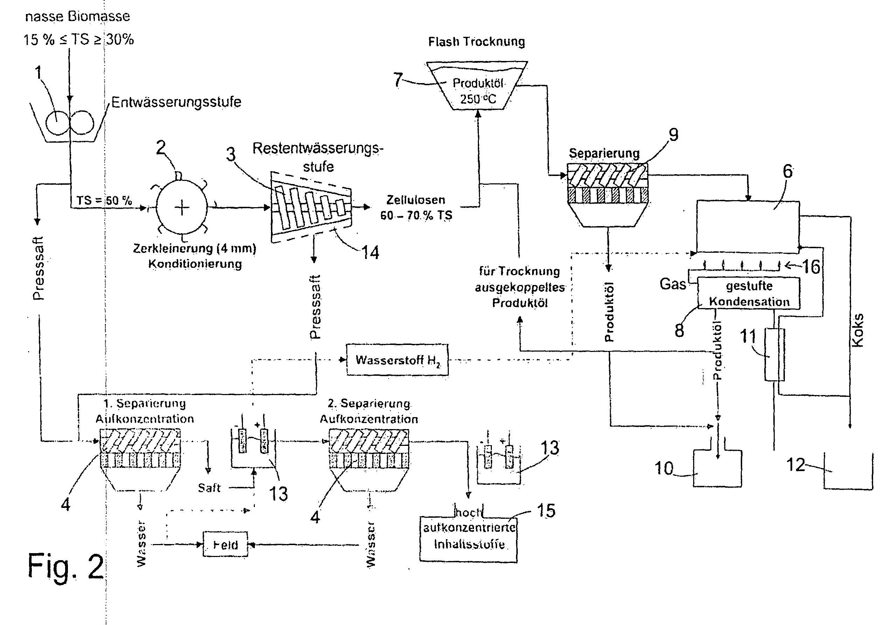

Eine Außenansicht des erfindungsgemäßen Erntefahrzeugs ist nicht gezeigt, da seine äußere Gestalt, soweit sie nicht der eines herkömmlichen Mähdreschers oder Feldhäckslers gleicht, im Wesentlichen lediglich durch die Anforderung diktiert ist, die in Fig. 1 bzw. Fig. 2 gezeigten Einrichtungen darin unterzubringen. Wie ein herkömmlicher Feldhäcksler oder Mähdrescher hat das Erntefahrzeug ein Fahrwerk, an dem vorne ein Erntegutaufnehmer austauschbar montiert ist. Der Erntegutaufnehmer ist mit dem eines herkömmlichen Feldhäckslers oder Mähdreschers identisch und austauschbar an diesem sowie am erfindungsgemäßen Erntefahrzeug verwendbar.

Zwei Presswalzen 1 bilden einen Spalt, dem die geerntete Biomasse vom Aufnehmer zugeführt wird. Beim Durchgang zwischen den Presswalzen 1 verliert die Biomasse je nach Pflanzenart etwa die Hälfte ihres Wasser; während der Anteil der Trockenmasse bei der frisch aufgenommenen Biomasse zwischen 10 und 30 % beträgt, ist der Anteil nach Durchgang durch die Presswalzen 1 auf 18 bis 46 % erhöht.

Die an den Presswalzen 1 vorentwässerte Biomasse durchläuft anschließend eine Häckselstufe 2, die wie bei einem Feldhäcksler eine rotierende Messerwalze und mit dieser zusammenwirkende ortsfeste Messer umfassen kann. Die Zerkleinerung ist intensiver als bei einem Feldhäcksler, zum Beispiel aufgrund einer engeren Staffelung der Messer oder einer erhöhten Verweildauer der Biomasse in der Häckselstufe 2, so dass beim Ausgang der Häckselstufe Teilchen mit einer typischen maximalen Größe von 4 mm erhalten werden.

Das zerkleinerte Material aus der Häckselstufe 2 wird einer zweiten Entwässerungsstufe 3, zum Beispiel einem Dekanter oder einer Siebzentrifuge, zugeführt. In Verbindung mit der intensiven Vorzerkleinerung ermöglicht dies eine Steigerung des Trockenmasseanteils auf 88 bis 98 Prozent. Der so erhaltene fasrige, zellulosereiche Feststoff, dessen Masse nur noch zirka 10 bis 30 % der ursprünglich aufgenommenen Biomasse ausmacht, wird in einem Bunker 12 an Bord des Fahrzeugs gesammelt. Er hat einen erheblich höheren spezifischen Energiegehalt als die frische Biomasse, so dass sein Weitertransport zu einer stationären Verarbeitungsanlage wirtschaftlich wird. Aufgrund der Gewichtsreduzierung ist die Strecke, über das entwässerte Material wirtschaftlich transportiert werden kann, drei bis zehn Mal länger als im Falle von frischer, nicht entwässerter Biomasse. Die Fläche, aus der eine zentrale Verarbeitungsanlage wirtschaftlich versorgt werden kann, bzw. das Aufkommen an wirtschaftlich verarbeitbarem Material im Umkreis einer solchen Anlage ist damit um zirka 10 bis 100 erhöht. Daraus resultieren beträchtliche Skalenvorteile für den Betrieb der Anlage.

Zur Verbesserung der Wasserabscheidung in der zweiten Entwässerungsstufe 3 kann vorgesehen werden, dass die Biomasse die zweite Entwässerungsstufe in erwärmtem Zustand durchläuft, z.B. indem mit der Biomasse in Kontakt stehende Wände einer Förderstrecke, auf der die Biomasse zwischen Häckselstube 2 und zweiter Entwässerungsstufe 3 gefördert wird, oder Wände der zweiten Entwässerungsstufe 3 selbst als Wärmetauscher 14 ausgebildet sind.

Das in den Entwässerungsstufen 1 und 3 abgetrennte Wasser könnte im einfachsten Fall unmittelbar auf die Ackerfläche abgelassen werden. Zweckmäßig ist jedoch, auch hier noch die enthaltenen wirtschaftlich nutzbaren Bestandteile wie Zucker, Proteine, Stärken, Lipide, Säuren oder Mineralstoffe in einer Konzentrationsstufe 4 abzutrennen, zum Beispiel einem Membranfilter oder mehreren in Reihe geschalteten derartigen Filtern. Mit bekannten Filtrationstechniken kann so ein an werthaltigen Bestandteilen angereicherter Strom mit einem Trockenmasseanteil von bis zu 80 Prozent und von den werthaltigen Bestandteilen weitgehend befreites Wasser erzeugt werden, das aufs Feld abgelassen wird.

In einer Nachtrocknungsstufe 5 kann der Feststöffanteil im angereicherten Strom auf bis zu 90 Prozent erhöht werden. Das so erhaltene Konzentrat wird in einem Tank 15 an Bord des Erntefahrzeugs für die Weiterverwertung, zum Beispiel als Futtermittel, als Rohstoff für die chemische Industrie oder als Rohstoff für Fermentationsprozesse zur Erzeugung von Biogas oder Ethanol gesammelt.

Fig. 2 zeigt ein Ausführungsbeispiel der erfindungsgemaßen Erntemaschine, bei dem die Verarbeitungstiefe an Bord der Erntemaschine gegenüber der Ausgestaltung der Fig. 1 erhöht ist. Die Entwässerungsstufen 1, 3 mit Presswalzen und Dekanter oder Zentrifuge, die zwischengeschaltete Häckselstufe 2 und die Konzentrationsstufe 4 zum Konzentrieren der werthaltigen Anteile in der abgepressten Flüssigkeit sind dieselben wie in der Ausgestaltung von Fig. 1.

Zusätzlich befindet sich an Bord des Fahrzeugs ein Flash-Pyrolysereaktor 6, der mit dem aus der frischen Biomasse gewonnenen entwässerten, im Wesentlichen aus Zellulose bestehenden Feststoff gespeist wird. Durch Erhitzung unter Luftabschluss in dem Reaktor 6 wird das zugeführte Material in einem kontinuierlichen Prozess umgesetzt in Wasser, diverse Kohlenwasserstoffe und einen im Wesentlichen aus Kohlenstoff bestehenden, als Koks bezeichneten Rest-Feststoffanteil. Die bei der höhen Temperatur des Reaktors 6 als Gas freigesetzten Reaktionsprodukte werden einer Köndensationsstufe 8 zugeführt und in Fraktionen mit unterschiedlichem Siedepunkt kondensiert. In der Köndensationsstufe 8 nicht kondensierbares Gas speist einen Brenner 16, der den Reaktor 6 beheizt.

In der Kondensätionsstufe 8 findet eine fraktionierte Kondensation statt, wobei parameter der Fraktionierung so festgelegt sind, dass eine Fraktion im wesentlichen das gesamte mit der Biomasse in den Reaktor 6 eingetragene sowie das durch die Pyrolysereaktionen darin erzeugte Wasser enthält, während wenigstens eine andere Fraktion, als Produktöl bezeichnet, im wesentlichen nur aus Kohlenwasserstoffen besteht. Das erhaltene Produktöl wird - falls vorhanden, nach Durchlaufen des mit Bezug auf Fig. 1 erwähnten Wärmetauschers 14 des Dekanters oder der Zentrifuge 3 - in einem Tank 10 gesammelt, mit Ausnahme eines Teils, vorzugsweise einer bei hoher Temperatur kondensierenden Fraktion, die ganz oder teilweise aus der Kondensationsstufe 8 abgezweigt wird, um in einer Trocknungsstufe 7 der entwässerten Biomasse aus der zweiten Entwässerungsstufe 3 zugesetzt zu werden. Die Trocknungsstufe 7 kann Knet- oder Rührwerkzeuge zum Vermengen des Öls mit der entwässerten Biomasse aufweisen. Die hohe Temperatur des Produktöls bringt die restliche Feuchtigkeit in der Biomasse zum Verdampfen, so dass ein Gemisch aus Produktöl und im Wesentlichen wasserfreier Biomasse am Ausgang der Nachtrocknungsstufe 7 abgezogen werden kann.

Dieses Gemisch durchläuft, bevor es den Reaktor 6 erreicht, eine Trennstufe 9, in der das Produktöl unter Druck von der Biomasse wieder abgeschieden wird. Das in dieser Weise abgetrennte Produktöl wird zusammen mit dem nicht der Trocknungsstufe 7 zugeführte Anteil des Produktöls aus der Kondensationsstufe 8 in dem Tank 10 gesammelt.

Einer bevorzugten Weiterbildung zufolge ist zum Reinigen der in der Kondensationsstufe 8 erhaltenen, im Wesentlichen aus Wasser bestehenden Kondensatfraktion ein Filter 11 vorgesehen. Als Filtersubstrat verwendet dieses Filter 11 einen Teil des Kokses aus dem Reaktor 6, der im Gegenstrom zu der wässrigen Fraktion kontinuierlich durch den Filter 11 gefördert wird und sich dabei mit den organischen Bestandteilen der wässrigen Fraktion sättigt. Das durch die Filterung erhaltene Wasser kann - wenn erforderlich, nach einer Nachreinigung - auf den Acker ausgegeben werden; der mit den organischen Anteilen gesättigte koks kann zusammen mit dem restlichen koks aus dem Reaktor 6 in einem Bunker 12 als Brennmaterial gesammelt werden, oder er kann - je nach Grad seiner Sättigung mit Wasser beziehungsweise mit organischem Material - in den Reaktor 6 direkt, wie in der Fig. 2 dargestellt, oder auf dem Umweg über die Trocknungsstufe 7 zurückgeführt werden, um die organischen Anteile im Reaktor 6 wieder abzudestillieren und zum Produktöl hinzuzufügen.

Einer anderen Weiterbildung der Erfindung zufolge ist eine Elektrolysezelle 13 vorgesehen, die mit dem angereicherten Anteil aus der Konzentrationsstufe 4 gespeist wird. Die Elektrolysezelle 13 ist mit frequenzmoduliertem Gleichstrom versorgt, um eine hohe wasserstoffausbeute bei reduziertem Energieeinsatz zu erreichen. Aus der Elektrolyse gewonnener Wasserstoff wird in den Pyrolysereaktor 6 eingespeist. Die damit erreichte Steigerung des Wasserstoffangebots im Reaktor 6 verbessert die Umsetzung des in der Biomasse gebundenen Sauerstoffs zu Wasser, so dass ein sauerstoffärmeres und damit qualitativ hochwertigeres Öl aus der Flash-Pyrolyse erhalten wird.

### Bezugszeichen

- 1: Presswalzen
- 2: Häckselstufe
- 3: Siebzentrifuge
- 4: Membranfilter
- 5: Nachtrocknungsstufe
- 6: Flash-Pyrolysereaktor
- 7: Trocknungsstufe
- 8: Kondensationsstufe
- 9: Trennstufe
- 10: Tank
- 11: Filter
- 12: Bunker
- 13: Elektrolysezelle
- 14: Wärmetauscher
- 15: Tank
- 16: Brenner

## Patentansprüche

1. Selbstfahrendes Erntefahrzeug mit einem Erntegutaufnehmer, einer Zerkleinerungsstufe (2) zum Zerkleinern des Erntegutes und einer mechanischen Entwässerungseinrichtung (1, 3) zum Abscheiden eines wässrigen Anteils aus dem Erntegut, **dadurch gekennzeichnet, dass** die mechanische Entwässerungseinrichtung (1, 3) eine der Zerkleinerungsstufe (2) vorgeschaltete erste Entwässerungsstufe (1) und eine der Zerkleinerungsstufe nachgeschaltete zweite Entwässerungsstufe (3) umfasst.

2. Selbstfahrendes Erntefahrzeug nach Anspruch 1, **dadurch gekennzeichnet, dass** die erste Entwässerungsstufe (1) wenigstens ein einen vom Erntegut durchlaufenen Pressspalt begrenzendes Presswalzenpaar umfasst.

3. Selbstfahrendes Erntefahrzeug nach Anspruch 1 oder 2, **dadurch gekennzeichnet, dass** die zweite Entwässerungsstufe (3) einen Dekanter oder eine Schneckenpresse umfasst.

4. Selbstfahrendes Erntefahrzeug nach einem der vorhergehenden Ansprüche, **gekennzeichnet durch** eine Heizeinrichtung (14) zum Erhitzen des die zweite Entwässerungsstufe (3) durchlaufenden Ernteguts.

5. Selbstfahrendes Erntefahrzeug nach einem der vorhergehenden Ansprüche, **dadurch gekennzeichnet, dass** die zweite Entwässerungsstufe (3) in der Lage ist, entwässertes Erntegut mit einem Trockenmasseanteil von wenigstens 60% zu liefern.

6. Selbstfahrendes Erntefahrzeug nach einem der vorhergehenden Ansprüche, **dadurch gekennzeichnet, dass** das entwässerte Erntegut im Wesentlichen aus Zellulose besteht.

7. Selbstfahrendes Erntefahrzeug nach einem der vorhergehenden Ansprüche, **dadurch gekennzeichnet, dass** der zweiten Entwässerungsstufe (3) eine Wärmebehandlungsstufe (6, 7) nachgeschaltet ist.

8. Selbstfahrendes Erntefahrzeug nach Anspruch 7, **dadurch gekennzeichnet, dass** die Wärmebehandlungsstufe (6, 7) einen thermochemischen Reaktor (6) zum Verschwelen des entwässerten Ernteguts in gasförmige und/oder flüssige und/oder feste Reaktionsprodukte umfasst.

9. Selbstfahrendes Erntefahrzeug nach Anspruch 8, soweit auf Anspruch 4 rückbezogen, **dadurch gekennzeichnet, dass** die Heizeinrichtung (14) mit Abwärme des thermochemischen Reaktors (6) gespeist ist.

10. Selbstfahrendes Erntefahrzeug nach einem der Ansprüche 7 bis 9, **dadurch gekennzeichnet, dass** die Wärmebehandlungsstufe (6, 7) eine Trocknungsstufe (7) umfässt.

11. Selbstfahrende Erntemaschine nach Anspruch 10, **dadurch gekennzeichnet, dass** die Trocknungsstufe (7) Mittel zum Versetzen des zu trocknenden Ernteguts mit heißem Wärmeträgermaterial umfasst.

12. Selbstfahrende Erntemaschine nach Anspruch 11, soweit auf Anspruch 8 rückbezogen, **dadurch gekennzeichnet, dass** das Wärmeträgermaterial ein Reaktionsprodukt des Reaktors (6) ist.

13. Selbstfahrendes Erntefahrzeug nach Anspruch 11 oder 12, **dadurch gekennzeichnet, dass** der Trocknungsstufe (7) eine Trennstufe (9) zum Abscheiden des zugesetzten Wärmeträgermaterials vom getrockneten Erntegut nachgeschaltet ist.

14. Selbstfahrendes Erntefahrzeug nach Anspruch 13, soweit auf Anspruch 12 rückbezogen, **dadurch gekennzeichnet, dass** die Trennstufe (9) dem Reaktor (6) vorgeschaltet ist.

15. Selbstfahrendes Erntefahrzeug nach einem der Ansprüche 8, 9, 12, 14, **gekennzeichnet durch** Mittel zum Einspeisen von wasserstoffgas in den Reaktor (6).

16. Selbstfahrendes Erntefahrzeug nach Anspruch 15, **gekennzeichnet durch** eine Elektrolysestufe (13) zur Gewinnung von Wasserstoff durch Elektrolyse von in der Entwässerungseinrichtung (1, 3) abgeschiedenem wässrigem Anteil.

17. Selbstfahrendes Erntefahrzeug nach einem der Ansprüche 8, 9, 12, 14 - 16, **gekennzeichnet durch** eine Kondensationsstufe (8) zum Kondensieren dampfförmiger Produkte des Reaktors (6) und Ausscheiden eines wasserhaltigen Kondensats, und einem Filter (11), der von dem wasserhaltigen Kondensat durchflossen und mit Koks aus dem Reaktor (6) als Filtermaterial beschickbar ist.

18. Selbstfahrendes Erntefahrzeug nach einem der Ansprüche 8, 9, 12, 14 - 17, **dadurch gekennzeichnet, dass** ein Brenner (7) zum Beheizen des Reaktors (6) mit gasförmigem Reaktionsprodukt des Reaktors (6) gespeist ist.

19. Selbstfahrendes Erntefahrzeug nach einem der vorhergehenden Ansprüche, **gekennzeichnet durch** eine Konzentrationsstufe (4), die den in wenigstens einer der Entwässerungsstufen (1, 3) abgeschiedenen wässrigen Anteil empfängt, zum Scheiden in einen an gelösten Stoffen angereicherten und einen an gelösten Stoffen abgereicherten Anteil

20. Selbstfahrendes Erntefahrzeug nach Anspruch 19, **gekennzeichnet durch** einen Sammeltank (15) für den angereicherten Anteil.

## Claims

1. A self-propelled harvesting vehicle comprising a crop material pick-up device, a commutation stage (2) for commutation of the crop material and a mechanical water removal device (1, 3) for removing an aqueous component from the crop material, **characterised in that** the mechanical water removal device (1, 3) includes a first water removal stage (1) disposed upstream of the commutation stage (2) and a second water removal stage (3) disposed downstream of the commutation stage.

2. A self-propelled harvesting vehicle according to claim 1 **characterised in that** the first water removal stage (1) includes at least one pair of pressing rollers defining a pressing gap through which the crop material passes.

3. A self-propelled harvesting vehicle according to claim 1 or claim 2 **characterised in that** the second water removal stage (3) includes a decanter or a screw press.

4. A self-propelled harvesting vehicle according to one of the preceding claims **characterised by** a heating device (14) for heating the crop material passing through the second water removal stage (3).

5. A self-propelled harvesting vehicle according to one of the preceding claims **characterised in that** the second water removal stage (3) is capable of delivering crop material from which water has been removed, with a dry mass proportion of at least 60%.

6. A self-propelled harvesting vehicle according to one of the preceding claims **characterised in that** the crop material from which water has been removed substantially comprises cellulose.

7. A self-propelled harvesting vehicle according to one of the preceding claims **characterised in that** a heat treatment stage (6, 7) is disposed downstream of the second water removal stage (3).

8. A self-propelled harvesting vehicle according to claim 7 **characterised in that** the heat treatment stage (6, 7) includes a thermochemical reactor (6) for carbonising the crop material from which water has been removed into gaseous and/or liquid and/or solid reaction products.

9. A self-propelled harvesting vehicle according to claim 8 when appended to claim 4 **characterised in that** the heating device (14) is fed with waste heat from the thermochemical reactor (6).

10. A self-propelled harvesting vehicle according to one of claims 7 to 9 **characterised in that** the heat treatment stage (6, 7) includes a drying stage (7).

11. A self-propelled harvesting vehicle according to claim 10 **characterised in that** the drying stage (7) includes means for mixing the crop material to be dried with hot heat carrier material.

12. A self-propelled harvesting vehicle according to claim 11 when appended to claim 8 **characterised in that** the heat carrier material is a reaction product of the reactor (6).

13. A self-propelled harvesting vehicle according to claim 11 or claim 12 **characterised in that** disposed downstream of the drying stage (7) is a separating stage (9) for separating the added heat carrier material from the dried crop material.

14. A self-propelled harvesting vehicle according to claim 13 when appended to claim 12 **characterised in that** the separating stage (9) is disposed upstream of the reactor (6).

15. A self-propelled harvesting vehicle according to one of claims 8, 9, 12 and 14 **characterised by** means for feeding hydrogen gas into the reactor (6).

16. A self-propelled harvesting vehicle according to claim 15 **characterised by** an electrolysis stage (13) for obtaining hydrogen by electrolysis from the aqueous component which is separated out in the water removal device (1, 3).

17. A self-propelled harvesting vehicle according to one of claims 8, 9, 12 and 14 to 16 **characterised by** a condensation stage (8) for condensing vapour products of the reactor (6) and separating off a water-bearing condensate, and a filter (11) through which the water-bearing condensate passes and which can be charged with coke from the reactor (6) as filter material.

18. A self-propelled harvesting vehicle according to one of claims 8, 9, 12 and 14 to 17 **characterised in that** a burner (7) for heating the reactor (6) is fed with gaseous reaction product from the reactor (6).

19. A self-propelled harvesting vehicle according to one of the preceding claims **characterised by** a concentration stage (4) which receives the aqueous component which is separated off in at least one of the water removal stages (1, 3), for separation into a portion which is enriched with dissolved substances and a portion which is depleted in respect of dissolved substances.

20. A self-propelled harvesting vehicle according to claim 19 **characterised by** a collecting tank (15) for the enriched portion.

## Revendications

1. Véhicule de récolte automoteur comprenant un ramasseur de produit de récolte, un étage de broyage (2) pour broyer le produit de récolte et un dispositif de déshydratation mécanique (1, 3) pour séparer une fraction aqueuse du produit de récolte, **caractérisé en ce que** le dispositif de déshydratation mécanique (1, 3) comprend un premier étage de déshydratation (1) placé en amont de l'étage de broyage (2) et un deuxième étage de déshydratation (3) placé en aval de l'étage de broyage.

2. Véhicule de récolte automoteur selon la revendication 1, **caractérisé en ce que** le premier étage de déshydratation (1) comprend au moins une paire de rouleaux de compression délimitant un espace de compression traversé par le produit de récolte.

3. Véhicule de récolte automoteur selon la revendication 1 ou 2, **caractérisé en ce que** le deuxième étage de déshydratation (3) comprend un décanteur ou une presse à vis.

4. Véhicule de récolte automoteur selon une des revendications précédentes, **caractérisé par** un dispositif de chauffage (14) pour chauffer le produit de récolte qui traverse le deuxième étage de déshydratation (3).

5. Véhicule de récolte automoteur selon une des revendications précédentes, **caractérisé en ce que** le deuxième étage de déshydratation (3) est en mesure de fournir un produit de récolte déshydraté ayant une fraction de masse sèche d'au moins 60 %.

6. Véhicule de récolte automoteur selon une des revendications précédentes, **caractérisé en ce que** le produit de récolte déshydraté est composé essentiellement de cellulose.

7. Véhicule de récolte automoteur selon une des revendications précédentes, **caractérisé en ce qu'**un étage de traitement thermique (6, 7) est placé en aval du deuxième étage de déshydratation (3).

8. Véhicule de récolte automoteur selon la revendication 7, **caractérisé en ce que** l'étage de traitement thermique (6, 7) comprend un réacteur thermochimique (6) pour pyrolyser le produit de récolte déshydraté en produits de réaction gazeux et/ou liquide et/ou solides.

9. Véhicule de récolte automoteur selon la revendication 8, pour autant qu'elle se réfère à la revendication 4, **caractérisé en ce que** le dispositif de chauffage (14) est alimenté par la chaleur dissipée du réacteur thermochimique (6).

10. Véhicule de récolte automoteur selon une des revendications 7 à 9, **caractérisé en ce que** l'étage de traitement thermique (6, 7) comprend un étage de séchage (7).

11. Machine de récolte automotrice selon la revendication 10, **caractérisée en ce que** l'étage de séchage (7) comprend des moyens pour ajouter un matériau caloporteur chaud au produit de récolte à sécher.

12. Machine de récolte automotrice selon la revendication 11, pour autant qu'elle se réfère à la revendication 8, **caractérisée en ce que** le matériau caloporteur est un produit de réaction du réacteur (6).

13. Véhicule de récolte automoteur selon la revendication 11 ou 12, **caractérisé en ce qu'**un étage de séparation (9) pour séparer le matériau caloporteur ajouté du produit de récolte séché est placé en aval de l'étage de séchage (7).

14. Véhicule de récolte automoteur selon la revendication 13, pour autant qu'elle se réfère à la revendication 12, **caractérisé en ce que** l'étage de séparation (9) est placé en amont du réacteur (6).

15. Véhicule de récolte automoteur selon une des revendications 8, 9, 12, 14, **caractérisé par** des moyens pour injecter du gaz hydrogène dans le réacteur (6).

16. Véhicule de récolte automoteur selon la revendication 15, **caractérisé par** un étage d'électrolyse (13) pour obtenir de l'hydrogène par électrolyse de la fraction aqueuse séparée dans le dispositif de déshydratation (1, 3).

17. Véhicule de récolte automoteur selon une des revendications 8, 9, 12, 14 - 16, **caractérisé par** un étage de condensation (8) pour condenser les produits du réacteur (6) à l'état de vapeur et séparer un condensat aqueux, et un filtre (11) qui est parcouru par le condensat aqueux et qui peut être alimenté en coke provenant du réacteur (6) et faisant fonction de matière filtrante.

18. Véhicule de récolte automoteur selon une des revendications 8, 9, 12, 14 - 17, **caractérisé en ce qu'**un brûleur (7) pour chauffer le réacteur (6) est alimenté par un produit de réaction gazeux du réacteur (6).

19. Véhicule de récolte automoteur selon une des revendications précédentes, **caractérisé par** un étage de concentration (4) qui reçoit la fraction aqueuse séparée dans au moins un des étages de déshydratation (1, 3) pour la séparer en une fraction enrichie en substances dissoutes et en une fraction appauvrie en substances dissoutes.

20. Véhicule de récolte automoteur selon la revendication 19, **caractérisé par** un réservoir de collecte (15) pour la fraction enrichie.
